# EUROPEAN PATENT APPLICATION

(11) **EP 3 179 084 A1**
(43) Date of publication of application: **14.06.2017**
(21) Application number: 16203257.7
(22) Date of filing: 09.12.2016
(51) Int. Cl.: F02K 1/06, F02K 3/06, F02K 1/72, F02C 7/04, F01D 25/16

(54) **GAS TURBINE ENGINE**

(30) Priority: 11.12.2015 US 201514966007
(71) Applicant: General Electric Company, Schenectady, NY 12345 (US)
(72) Inventor: MILLER, Brandon Wayne, Cincinnati, OH Ohio 45215 (US); FRANER, Matthew Timothy, Cincinnati, OH Ohio 45215 (US); STUART, Alan Roy, Cincinnati, OH Ohio 45215 (US)
(74) Representative: Williams, Andrew Richard

(57) **Abstract**

A gas turbine engine (16) includes a fan (38) and a core (16) in flow communication with the fan (38). The core (16) includes an aftmost turbine, and the aftmost turbine includes an aftmost stage of rotor blades. The gas turbine engine (16) also includes a nacelle assembly (50) having a translating and rotating thrust reverser system (100) and enclosing the fan (36) and at least a portion of the core (16). The nacelle assembly (50) defines a nacelle assembly length (L_{N}) between a forward lip (114) and an aft edge (116). Additionally, the gas turbine engine (16) defines an engine length (L_{E}) between the forward lip (114) of the nacelle assembly (50) and the aftmost stage of rotor blades of the aftmost turbine. A ratio of the engine length (L_{E}) to the nacelle assembly length (L_{N}) is greater than about 0.5 and less than about 1.

## Description

### FIELD OF THE INVENTION

The present subject matter relates generally to a gas turbine engine.

### BACKGROUND OF THE INVENTION

Turbofan engines generally include a fan and a core arranged in flow communication with one another. The core of the turbofan engine generally includes, in serial flow order, a compressor section, a combustion section, a turbine section, and an exhaust section. In operation, the air provided to the core flows through the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gasses through the turbine section drives the turbine section and is then routed through the exhaust section, e.g., to atmosphere.

The fan generally includes a plurality of rotatable fan blades generating a flow of air. A first portion of the flow of air over the fan may be provided to the core and a second portion of air over the fan may flow past the core through a bypass passage (defined between the core and an outer nacelle assembly).

It can be beneficial to include a thrust reverser system within the nacelle assembly, which may generally increase a length of the nacelle assembly. When operated, the thrust reverser system may reverse a flow of air through the bypass passage to create an amount of reverse thrust for the gas turbine engine. Moreover, it can be beneficial to increase the diameter of the fan blades, such that the fan may be operated at a relatively low pressure ratio while providing a desired amount of thrust. However, the inventors of the present disclosure have discovered that the longer nacelle assembly can create an increased amount of drag, especially with a relatively large fan, which may thus increase an amount of fuel burn. Accordingly, a gas turbine engine having a relatively short nacelle assembly as compared to a length of the gas turbine engine would be beneficial. More specifically, a gas turbine engine having a fan defining a relatively low fan pressure ratio and including a relatively short nacelle assembly would be particularly useful.

### BRIEF DESCRIPTION OF THE INVENTION

Aspects and advantages of the invention will be set forth in part in the following description, or may be obvious from the description, or may be learned through practice of the invention.

In one exemplary embodiment of the present disclosure, a gas turbine engine is provided. The gas turbine engine includes a fan and a core in flow communication with the fan. The core includes an aftmost turbine, and the aftmost turbine includes an aftmost stage of rotor blades. The gas turbine engine also includes a nacelle assembly having a translating and rotating thrust reverser system and enclosing the fan and at least a portion of the core. The nacelle assembly further includes a forward lip and an aft edge and defines a nacelle assembly length between the forward lip and the aft edge. The gas turbine engine defines an engine length between the forward lip of the nacelle assembly and the aftmost stage of rotor blades of the aftmost turbine. A ratio of engine length to nacelle assembly length is greater than about 0.5 and less than about 1.

In another exemplary embodiment of the present disclosure, a gas turbine engine is provided. The gas turbine engine includes a fan having a plurality of fan blades. The plurality of fan blades define a fan diameter. The gas turbine engine also includes a core in flow communication with the fan, and a nacelle assembly. The nacelle assembly includes a translating and rotating thrust reverser system and encloses the fan and at least a portion of the core. The nacelle assembly additionally includes an aft edge and defines an inner diameter at the aft edge. The gas turbine engine defines a ratio of the inner diameter of the nacelle assembly at the aft edge to the fan diameter of at least about 0.9.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a schematic cross-sectional view of an exemplary gas turbine engine according to various embodiments of the present subject matter having a thrust reverser system in a fully stowed position.
FIG. 2 is a schematic cross-sectional view of the exemplary gas turbine engine of FIG. 1, having the exemplary thrust reverser system in a fully deployed position.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows.

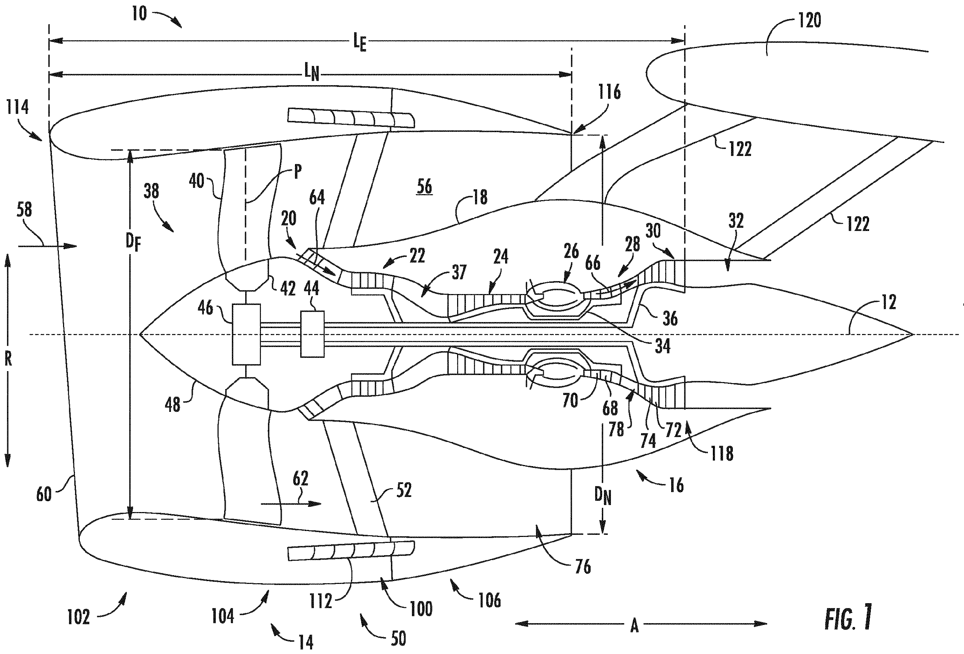

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine 10, referred to herein as "turbofan engine 10." As shown in FIG. 1, the turbofan engine 10 defines an axial direction A (extending parallel to a longitudinal centerline 12 provided for reference) and a radial direction R. The turbofan engine 10 may also define a circumferential direction (not shown) extending circumferentially about the axial direction A. In general, the turbofan 10 includes a fan section 14 and a core engine 16 disposed downstream from the fan section 14.

The exemplary core engine 16 depicted is generally enclosed within a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22. The compressor section, combustion section 26, turbine section, and nozzle section 32 together define a core air flowpath 37 therethrough.

For the embodiment depicted, the fan section 14 includes a variable pitch fan 38 having a plurality of fan blades 40. The fan blades 40 are rotatable about the longitudinal axis 12 by LP shaft 36 across a power gear box 44. The power gear box 44 includes a plurality of gears for stepping down the rotational speed of the LP shaft 36 to a more efficient rotational fan speed. Additionally, each of the plurality of fan blades 40 are rotatable about respective pitch axes P by a pitch change mechanism 46.

Referring still to the exemplary embodiment of FIG. 1, the disk 42 is covered by rotatable front hub 48 aerodynamically contoured to promote an airflow through the plurality of fan blades 40. Additionally, the exemplary turbofan engine 10 includes an annular nacelle assembly 50 that circumferentially surrounds the fan 38 and at least a portion of the core engine 16. The nacelle assembly 50 is supported relative to the core engine 16 by a plurality of circumferentially-spaced outlet guide vanes 52. Moreover, a portion of the nacelle assembly 50 extends over an outer portion of the casing 18 so as to define a bypass airflow passage 56 therebetween. As will be discussed in greater detail below, the nacelle assembly 50 additionally includes a translating and rotating thrust reverser system 100, which is depicted in a fully stowed position in FIG. 1.

During operation of the turbofan engine 10, a volume of air 58 enters the turbofan 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the core air flowpath 37, or more specifically into the LP compressor 22. The ratio between the first portion of air 62 and the second portion of air 64 is commonly known as a bypass ratio. The pressure of the second portion of air 64 is then increased as it is routed through the high pressure (HP) compressor 24. The second portion of air 64 then flows into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the core engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the turbofan 10, also providing propulsive thrust. The HP turbine 28, the LP turbine 30, and the jet exhaust nozzle section 32 at least partially define a hot gas path 78 for routing the combustion gases 66 through the core engine 16.

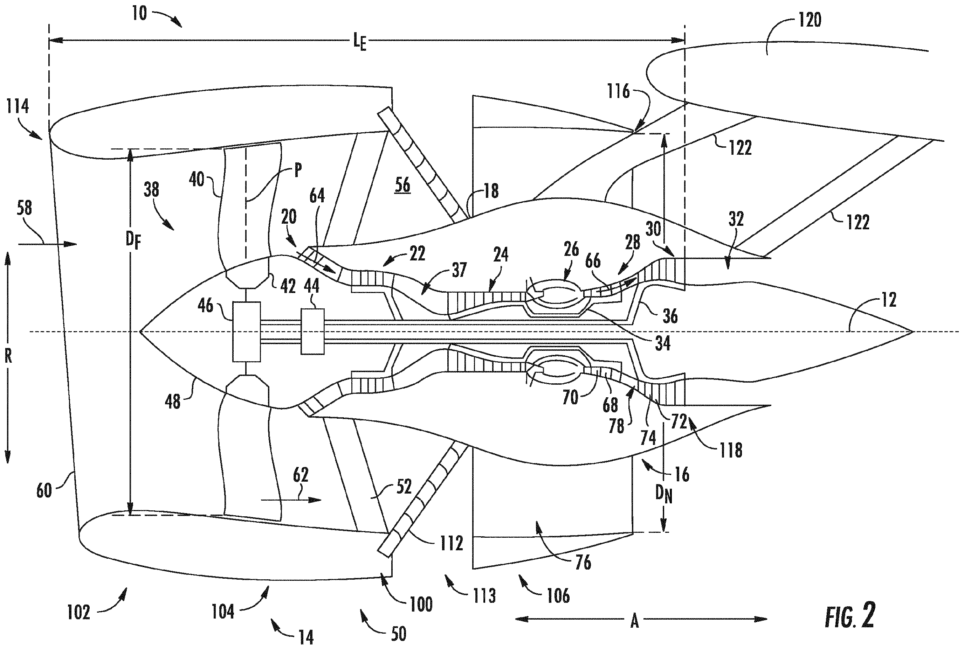

Referring still to FIG. 1, and now also to FIG. 2, depicting the exemplary turbofan engine 10 with the thrust reverser system 100 in the fully deployed position, the nacelle assembly 50 of the turbofan engine 10 generally includes an inlet assembly 102, a fan cowl 104, a translating cowl (transcowl) 106 that is slidable relative to the fan cowl 104, and the translating and rotating thrust reverser system 100. The inlet assembly 102 is positioned at a forward end of the nacelle assembly 50, and the fan cowl 104 is positioned aft of the inlet assembly 102 and at least partially surrounds the fan 38. As is depicted, the transcowl 106 is the aft-most section of the nacelle assembly 50, located aft of the fan cowl 104 and circumscribing the outer casing 18 of the core engine 16.

Moreover, the thrust reverser system 100 generally includes a cascade system 112. When in the fully stowed position (FIG. 1), the cascade system 112 is stowed at least partially within the fan cowl 104 and trans-cowl 106, with the transcowl 106 positioned adjacent to the fan cowl 104. By contrast, when in the fully deployed position (FIG. 2), the cascade system 112 is positioned at least partially in the bypass passage 56, and the transcowl 106 is positioned away from the fan cowl 104, defining an opening 113 therebetween. More specifically, as is depicted, when the thrust reverser system 100 is in the fully stowed position (FIG. 1), the cascade system 112 is completely enclosed within the fan cowl 104 and transcowl 106 (i.e., within the nacelle assembly 50). By contrast, when the thrust reverser system 100 is in the fully deployed position (FIG. 2), the cascade system 112 extends substantially across a radial width of the bypass passage 56 and redirects an airflow from the bypass passage 56 through the opening 113 to generate reverse thrust.

As stated, the thrust reverser system 100 is a translating and rotating thrust reverser system 100. Accordingly, the thrust reverser system 100 is configured to translate and rotate when moved from the fully stowed position to the fully deployed position. More particularly, for the embodiment depicted, the trans-cowl 106 and cascade system 112 are configured to translate along the axial direction A when moved from the fully stowed position to the fully deployed position, and the cascade system 112 is further configured to rotate inwardly along the radial direction R when moved from the fully stowed position to the fully deployed position. For example, the cascade system 112 may be roatably attached to an annular ring at a forward end and pivotably attached to one or more linkage arms (the linkage arms in turn pivotably attached to the core engine 16), such that as the cascade system 112 translates axially, it is also rotated into or out of the bypass passage 56.

It should be appreciated, however, that in other exemplary embodiments, the thrust reverser system 100 may not be configured as a translating and rotating thrust reverser system, and instead may simply be, e.g., a translating thrust reverser. In such an embodiment, the cascade system 112 and/or the transcowl 106 may translate along the axial direction A when moved from the fully stowed position to the fully deployed position, and a plurality of, e.g., blocker doors may be simultaneously deployed or retracted to force the air though the cascade system 112.

Although not depicted, the thrust reverser system 100 may include one or more actuation assemblies to move the thrust reverser system 100 between the fully stowed position and the fully deployed position. The actuation assemblies can be of any suitable type and can be driven by, e.g., pneumatic, hydraulic, or electric motors. Moreover, the actuator assemblies may be, for example, circumferentially spaced within the nacelle assembly 50. Further, as discussed above, in at least certain exemplary embodiments, the thrust reverser system 100 may include a series of linkage arms extending between the cascade system 112 and the core engine 16 to pivot the cascade system 112 into the bypass passage 56 when the thrust reverser system 100 is moved to the fully deployed position. Alternatively, the thrust reverser system 100 may be moved into the fully deployed position in any other suitable manner.

Notably, as the cascade system 112 is stowed at least partially within the fan cowl 104 when in the fully stowed position (and slides/translates into the deployed position), inclusion of the cascade system 112 may not add to an overall axial length of the nacelle assembly 50. For example, the exemplary nacelle assembly 50 depicted includes a forward lip 114 and an aft edge 116. Notably, the inlet 60 of the exemplary nacelle assembly 50 depicted defines a slight angle relative to the radial direction R. Accordingly, as used herein, the term "forward lip" with reference to the nacelle assembly 50 refers to the forward-most point of the nacelle assembly 50.

The nacelle assembly 50 further defines a nacelle assembly length L_{N} between the forward lip 114 and the aft edge 116. For the embodiment depicted, the nacelle assembly length L_{N} is defined along the axial direction A between the forward lip 114 and the aft edge 116 of the nacelle assembly 50 when the thrust reverser system 100 is in a fully stowed position.

Referring still to FIGS. 1 and 2, the turbofan engine 10 defines an engine length L_{E} between forward lip 114 of the nacelle assembly 50 and an aftmost stage of rotor blades of an aftmost turbine of the turbine section. More specifically, for the embodiment depicted, the aftmost stage of rotor blades of the aftmost turbine is an aftmost stage 118 of rotor blades of the LP turbine 30.

As previously discussed, the nacelle assembly 50 of the exemplary turbofan engine 10 is a relatively short nacelle assembly 50. Specifically, the exemplary turbofan engine 10 depicted defines a ratio (L_{N}:L_{E}) of nacelle assembly length L_{N} to engine length L_{E} greater than about 0.5 and less than about 1. More specifically, the exemplary turbofan engine 10 depicted defines a ratio (L_{N}:L_{E}) of engine length L_{E} to nacelle assembly length L_{N} greater than about 0.6 and less than about 0.8. It should be appreciated, that as used herein, terms of approximation, such as "about" or "approximately," refer to being within a 10% margin of error.

Referring still to FIGS. 1 and 2, the fan of the turbofan engine 10 is a relatively low pressure ratio fan. Specifically, the exemplary turbofan engine 10 depicted has a relatively large fan 38 rotating at a relatively low speed. For example, the fan 38 of the exemplary embodiment depicted defines a fan pressure ratio during peak operation of less than about 1.4. As used herein, the term "peak operation" refers to an engine operating condition in which the fan 38 is operating at a maximum rotational speed.

Further, as is depicted, the plurality of fan blades 40 of the fan 38 together define a fan diameter D_{F} generally along the radial direction R. Additionally, the nacelle assembly 50 defines an inner diameter D_{N} at the aft edge 116 of the nacelle assembly 50. The turbofan engine 10 depicted defines a ratio (D_{N}:D_{F}) of the inner diameter D_{N} of the nacelle assembly 50 at the aft edge 116 to the fan diameter D_{F} of at least 0.95. For example, in certain exemplary embodiments, the turbofan engine 10 may define a ratio (D_{N}:D_{F}) of the inner diameter D_{N} of the nacelle assembly 50 at the aft edge 116 to the fan diameter D_{F} of at least 1.0, or of at least 1.05.

Further still, for the exemplary turbofan engine 10 depicted, the nacelle assembly 50 defines a ratio (L_{N}:D_{N}) of the nacelle assembly length L_{N} to the inner diameter D_{N} of the nacelle assembly 50 at the aft edge 116 less than about 3.0, such as less than about 2.5, less than about 2.0, or less than 1.45. Similarly, the nacelle assembly 50 may define a similar ratio (L_{N}:D_{F}) of the nacelle assembly length L_{N} to the fan diameter D_{F}. The ratio (L_{N}:D_{F}) may also be less than about 3.0, such as less than about 2.5, less than about 2.0, or less than 1.45.

The inventors of the present disclosure have discovered that a turbofan engine 10 including a fan 38 and nacelle assembly 50 in accordance with the present disclosure may result in a decreased amount of drag during operation, while still producing a desired amount of thrust. For example, a nacelle assembly 50 in accordance with the present disclosure, in conjunction with a fan 38 in accordance with the present disclosure, may allow for the turbofan engine 10 to operate the fan 38 at a relatively low speed, while efficiently generating a desired amount of thrust. The relatively short nacelle assembly 50 may be long enough to channel an airflow through the bypass passage 56 to produce a desired amount of thrust, without incurring an undesirable amount of drag. Furthermore, a nacelle assembly 50 in accordance with one or more aspects of the present disclosure may provide the benefits described herein while still allowing the turbofan engine to generate an amount of reverse thrust using a thrust reverser system contained within the nacelle assembly.

Referring still to FIGS. 1 and 2, it should be appreciated, that the exemplary turbofan engine 10 depicted is configured as a core-mounted turbofan engine. More specifically, for the embodiment depicted, the turbofan engine 10 is mounted beneath a wing 120 of an aircraft (not shown) through one or more struts 122 extending from the wing 120 directly to the core 16. Such a configuration may assist with providing the turbofan engine 10 with a nacelle assembly 50 according to one or more of the exemplary aspects described herein. Specifically, by mounting the turbofan engine 10 to the wing 120 through one or more struts 122 attached directly to the core 16 of the turbofan engine 10, the nacelle assembly 50 may not be required to carry a structural load of the core 16 of the turbofan engine 10 during operation of the turbofan engine 10. Further, inclusion of the nacelle assembly 50 in accordance with one or more aspects of the present disclosure may allow for the core-mounting of the turbofan engine 10. Specifically, a turbofan engine 10 in accordance with the present disclosure may have a shorter nacelle assembly 50 relative to a length of the core 16, such that a sufficient amount of the core 16 is exposed for mounting to the wing 120.

It should be appreciated, however, that the exemplary turbofan engine 10 described in FIGS. 1 and 2 is provided by way of example only and that in other exemplary embodiments, the turbofan engine 10 may have any other suitable configuration. For example, in other exemplary embodiments, the fan 38 of the turbofan engine 10 may be configured as a fixed pitch fan such that the plurality of fan blades 40 are not rotatable about respective pitch axes P and the turbofan engine 10 does not include the pitch change mechanism 46. Additionally, in still other exemplary embodiments, the turbofan engine 10 may not be configured as a geared gas turbine engine, such that the turbofan engine 10 may not include the power gearbox 44 mechanically coupling the LP shaft 36 to the fan 38. Moreover, in still other exemplary embodiments, the turbofan engine 10 may not be a core-mounted turbofan engine 10, and instead may be configured to be mounted to a wing 120 of an aircraft through one or more struts 122 extending to and/or through the nacelle assembly 50. Further, in still other exemplary embodiments, any other suitable thrust reverser system 100 may be included with the nacelle assembly 50. Further still, in other exemplary embodiments, the turbofan engine 10 may include a variable fan area nozzle. More specifically, the nacelle assembly 50 may be configured to expand generally along the radial direction R at an aft end during certain operations to increase an effective cross-sectional area of the nozzle 76.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A gas turbine engine comprising:
   a fan comprising a plurality of fan blades, the plurality of fan blades defining a fan diameter;
   a core in flow communication with the fan; and
   a nacelle assembly comprising a translating and rotating thrust reverser system and enclosing the fan and at least a portion of the core, the nacelle assembly comprising an aft edge and defining an inner diameter at the aft edge, the gas turbine engine defining a ratio of the inner diameter of the nacelle assembly at the aft edge to the fan diameter of at least about 0.9.
2. The gas turbine engine of clause 1, wherein the fan defines a fan pressure ratio of less than about 1.4 during peak operation.
3. The gas turbine engine of any preceding clause, wherein the aftmost turbine is a low pressure turbine.
4. The gas turbine engine of any preceding clause, wherein the thrust reverser system includes a cascade system moveable between a fully stowed position and a fully deployed position, wherein the cascade system is completely enclosed in the nacelle assembly when in the fully stowed position.
5. The gas turbine engine of any preceding clause, wherein the core comprises an aftmost turbine, wherein the aft most turbine comprises an aftmost stage of rotor blades, wherein the nacelle assembly comprises a forward lip and defines a nacelle assembly length between the forward lip and the aft edge, wherein the gas turbine engine defines an engine length between the forward lip of the nacelle assembly and the aftmost stage of rotor blades, and wherein the gas turbine engine defines a ratio of engine length to nacelle assembly length greater than about 0.5 and less than about 1.
6. The gas turbine engine of any preceding clause, wherein the thrust reverser system is moveable between a fully stowed position and a fully deployed position, and wherein the nacelle assembly length is defined between the forward lip and the aft edge when the thrust reverser system is in the fully stowed position.
7. The gas turbine engine of any preceding clause, wherein the nacelle assembly defines a ratio of nacelle assembly length to the inner diameter of the nacelle assembly at the aft edge less than about three.
8. The gas turbine engine of any preceding clause, wherein the gas turbine engine further comprises
   a power gearbox mechanically coupling the core of the gas turbine engine to the fan of the gas turbine engine.
9. The gas turbine engine of any preceding clause, wherein the gas turbine engine is a core-mounted gas turbine engine.

## Claims

1. A gas turbine engine comprising:
a fan (38);
a core (16) in flow communication with the fan (38), the core (16) comprising an aftmost turbine, the aftmost turbine comprising an aftmost stage of rotor blades; and
a nacelle assembly (50) comprising a translating and rotating thrust reverser system (100) and enclosing the fan (38) and at least a portion of the core (16), the nacelle assembly (50) further comprising a forward lip (114) and an aft edge (116) and defining a nacelle assembly length (L_{N}) between the forward lip (114) and the aft edge (116), the gas turbine engine defining an engine length (L_{E}) between the forward lip (114) of the nacelle assembly (50) and the aftmost stage of rotor blades of the aftmost turbine, a ratio of the engine length (L_{E}) to the nacelle assembly length (L_{N}) being less than about 1.

2. The gas turbine engine of claim 1, wherein the fan (38) defines a fan pressure ratio of less than about 1.4 during peak operation.

3. The gas turbine engine of claim 1 or 2, wherein the aftmost turbine is a low pressure turbine.

4. The gas turbine engine of any of claims 1, to 3 wherein the thrust reverser system (100) includes a cascade system (112) moveable between a fully stowed position and a fully deployed position, wherein the cascade system (112) is completely enclosed in the nacelle assembly (50) when in the fully stowed position.

5. The gas turbine engine of any preceding claim, wherein the thrust reverser system (100) is moveable between a fully stowed position and a fully deployed position, and wherein the nacelle assembly length (L_{N}) is defined between the forward lip (114) and the aft edge (116) when the thrust reverser system (100) is in the fully stowed position.

6. The gas turbine engine of any preceding claim, wherein the fan (38) comprises a plurality of fan blades (40) defining a fan diameter (D_{R}), wherein the nacelle assembly (50) defines an inner diameter (D_{N}) at the aft edge (116), and wherein the gas turbine engine defines a ratio of the inner diameter (D_{N}) of the nacelle assembly (50) at the aft edge (116) to the fan diameter (D_{F}) of at least about 0.9.

7. The gas turbine engine of any preceding claim, wherein the nacelle assembly (50) defines an inner diameter (D_{N}) at the aft edge (116), and wherein the nacelle assembly (50) defines a ratio of nacelle assembly length (L_{N}) to the inner diameter (D_{N}) of the nacelle assembly (50) at the aft edge less than about three.

8. The gas turbine engine of any preceding claim, wherein the gas turbine engine further comprises
a power gearbox (44) mechanically coupling the core (16) of the gas turbine engine (16) to the fan (38) of the gas turbine engine.

9. The gas turbine engine of any preceding claim, wherein the fan (38) is a variable pitch fan.

10. The gas turbine engine of any preceding claim, wherein the gas turbine engine (16) includes a variable area fan nozzle.

11. The gas turbine engine of any preceding claim, wherein the gas turbine engine is a core-mounted gas turbine engine (16).
